# EUROPÄISCHE PATENTANMELDUNG

(11) **EP 2 017 777 A1**
(43) Veröffentlichungstag der Anmeldung: **21.01.2009**
(21) Anmeldenummer: 08008892.5
(22) Anmeldetag: 14.05.2008
(51) Int. Cl.: G06Q 10/00

(54) **Verfahren und Vorrichtung zur Erzeugung und Abarbeitung von digitalen Benutzereingaben in Prozesssystemen**

(30) Priorität: 17.07.2007 DE 102007033605
(71) Anmelder: Deutsche Telekom AG, 53113 Bonn (DE)
(72) Erfinder: Barna, Dorin, 74321 Bietigheim-Bissingen (DE); Kitschke, Stefan, 33699 Bielefeld (DE); Schroth, Albrecht, 71083 Herrenberg (DE); Wichlacz, Rainer, 66606 St. Wendel (DE)

(57) **Zusammenfassung**

Ein Verfahren zum Erzeugen und Abarbeiten von Aufträgen, die in Form von digitalen Prozessen auf einem Computer abgebildet sind, wobei der Auftrag ein ausführbarer Code selber ist, der mit dem Auftrag erzeugt wird und danach abgearbeitet wird, umfassend die Schritte:
- Bestimmen eines Prozesses und Anfragen des Prozesstemplates von einem Broker;
- Bereitstellen eines Prozesstemplates durch den Broker, das bereits teilweise ausführbaren Code aufweist oder eine Codierung, die ersetzbar ist durch kleine Codeeinheiten,
- Instanzieren des Prozesstemplates mit Benutzereingaben;
- Aufbau eines transienten Prozessbaumes durch einen Assembler, wobei der Assembler Meta-Informationen verwendet um die Codierungen durch kleine Codeeinheiten, zu ersetzen, wobei der so erschaffene Code serialisierbar ist;
- Ausführen des Prozesstemplates auf einer virtuellen Maschine oder einem Interpreter, wobei vorher eine Analyse auf Parallelisierbarkeit erfolgt, um das Prozesstemplate ggfs. auf mehre Interpreter oder virtuelle Maschinen aufzuteilen, und dann wieder zusammenzuführen.

## Beschreibung

### Gebiet der Erfindung:

Aufgaben im Umfeld von Konzernen wie der T-Com werden als Aufträge abgearbeitet.

Zu betonen ist an dieser Stelle, dass dieses Verfahren (BPRB) nicht nur auf Aufträge, die in diesem Dokument zu Erklärung der internen Abläufe innerhalb des BPRB benutzt werden, angewandt werden kann, sondern dass es sich um ein generisches Konzept handelt, das sehr einfach auf andere Applikationen übertragen werden kann. So wird z.B. im Umfeld eines Projektes der BPRB zur Abbildung von Rahmenverträgen mit Re-Sellern benutzt.

Typischerweise werden für die oben beschriebenen Aufgaben Business Process Execution Engines (basierend auf BPEL) oder Workflow Systeme eingesetzt (siehe www.w3c.org), die jeweils mittels der Modelle (erstellt z.B. in BPEL, UML ...) des jeweiligen Auftrages aufgesetzt (Deployment) werden.

Diese Modelle umfassen den Flow (Ablauf des eigentlichen Prozesses) und ein Modell des zu bearbeitenden Auftrages.

Ändert sich der Inhalt dieses Auftrages (z.B. zusätzliches Attribut), muss diese Änderung modelliert und danach "deployed" werden.

Der Lebenszyklus stellt sich wie folgt dar:
1) Geschäftsprozessmodellierung inkl.
   a. Prozessstruktur
   b. Anwendungen und Data
2) Deployment inkl.
   a. Generierung von Code
   b. eigentliche Deployment
3)Prozessausführung
4) Monitoring und Ausführung
   Dieser Zyklus wird typischerweise bei jeder Art von Änderung durchlaufen. Ein solcher Zyklus ist recht umfangreich und Bedarf einer Vielzahl von Anpassungen bei einer Änderung.

### Überblick über die Erfindung

Aufgabe der vorliegenden Erfindung ist, den Prozessablauf auf den einzelnen Computern flexibler zu gestalten, so dass keine aufwendigen Anpassungen notwendig sind.

Wie in der Anmeldung aufgeführt, ist es das Ziel des BPRB, diese Aufträge interpretativ zu prozessieren, ohne die Zurhilfenahme zusätzlichen Programmcodes, der den Prozess individualisiert.

Von einer Business Process Execution Engine erhält der PBRB die Anfrage, einen bestimmten Auftrag auszuführen. Ist dieser als Template verfügbar, wird er geladen und in den eigentlichen Interpreter überführt.

Der BPRB führt zunächst eine Optimierung aus. In dieser eruiert der BPRB, welche Teile eines Auftrages parallel ausgeführt werden können (er benutzt hierzu entsprechende Meta Information, sowie Aspekte einzelner Services). Ist diese Phase abgeschlossen, parallelisiert ein Dispatcher die einzelnen (und jetzt unabhängigen) Threads eines Auftrages und übergibt diese an eine virtuelle Maschine, die die Ausführung eines Threads übernimmt. Die virtuelle Maschine bedient sich wiederum der Metainformation über einzelner Services, die ihr das Mapping zwischen "Teilauftrag" und jeweiligem Service erlaubt.

Am Ende fügt ein Merger die einzelnen Threads wiederum zum Gesamt-Auftrag zusammen. Das folgende Bild beschreibt die Möglichkeit der Skalierung des BPRBs.

Business Process Request Broker Skalierbarkeit

Die Erfindung basiert auf einem Interpreter Ansatz, wobei das Programm des Interpreters der auszuführende Auftrag selbst ist.

Durch diesen Ansatz ergeben sich folgende Vorteile:
1) Fast Cycle Time
   a. Änderungen werden direkt an einem Auftrags-Template vorgenommen, dieses wird eingestellt und kann direkt verarbeitet werden (es entfällt also gegenüber dem Stand der Technik die Modellierungs-Phase).
   b. Diese Eingabe kann direkt von einem Sachbearbeiter vorgenommen werden, ohne dass diese/r spezielle EDV Kenntnisse benötigt.
2) Maximierung Durchsatz
   a. Potentielle Parallelitäten werden von diesem Interpreter selbst erkannt und genutzt, OHNE dass diese explizit modelliert oder programmiert werden müssen.
3) Fehlertoleranz
   a.Ein Auftrag kann zu jedem Zeitpunkt, in jedem Zustand (teilweise bearbeitet) eingestellt werden, OHNE dass hierfür vorher entsprechende Einsprungpunkte innerhalb des Prozesses vorgesehen sein mussten.
   b.Steht ein Service, der für die Implementierung des Prozesses notwendig ist, temporär nicht zur Verfügung (Störfall), führt dies NICHT zu einer Fehlersituation, die modelliert oder programmiert werden müsste.
4) Erweiterbarkeit
   a. Aufgrund des gewählten Ansatzes (Interpreter, Trennung Implementierung - System Aspekte) ist das Gesamtsystem hoch flexibel (Konfigurieren anstatt Programmieren) und kann damit, leicht zur Laufzeit angepasst werden.
5) Skalierbarkeit
   a. Aufgrund seiner Möglichkeit der hierarchischen Organisation, ist der Interpreter in höchstem Masse skalierbar.

### Figurenbeschreibung:

Im Folgenden werden die Figuren kurz beschrieben, um das Verständnis der Erfindung zu erleichtern:
Fig. 1 zeigt den generellen Ablauf eines Auftrages und dessen Bearbeitung;
Fig. 2 zeigt die Anforderung eines Templates vom Broker;
Fig. 3 zeigt die Instanzierung durch den Instantiator;
Fig. 4 zeigt den Assembler mit Zugriff auf MetaInformationen und der Erzeugung eines Prozess-Baumes
Fig. 5 zeigt den detaillierten Aufbau eines Assemblers
Fig. 6 zeigt den detaillierten Aufbau der Execution Engine.

### Bevorzugte Ausführungsform:

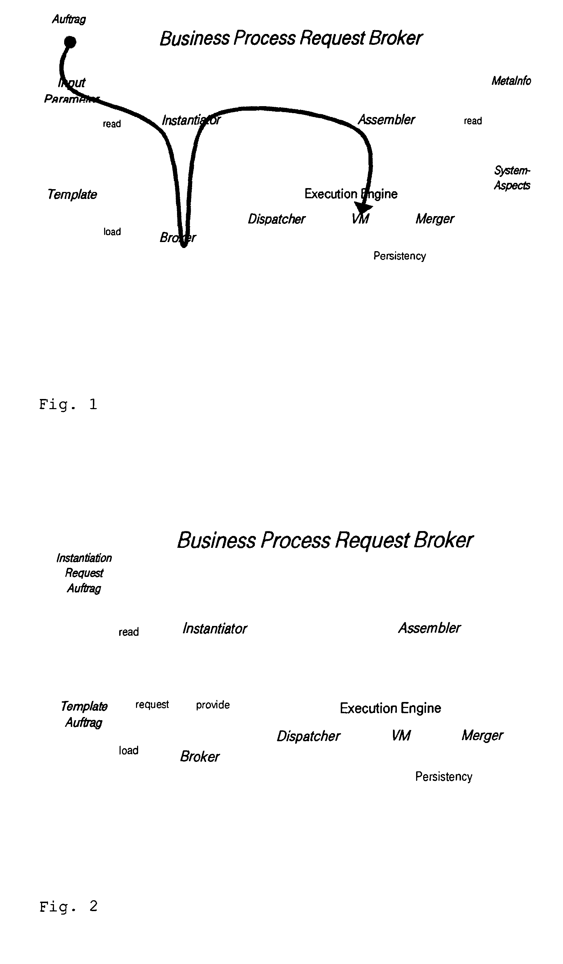

Im Folgenden wird anhand der Figur 1 der Ablauf bei der Prozessierung eines Auftrages im Umfeld z.B. der T-Com gezeigt.

Der erste Schritt (Fig .1) ist die Instanzierung des eigentlichen Auftrages. Diese erfolgt aufgrund eines "Instatiation Requests" an den "Instatiator" innerhalb des BPRB. Der "Instantiator" fragt bei einem internen "Broker" (Verwaltungs-Instanz für das Management von Auftrags-Templates) nach, ob ein entsprechendes Template für den zu bearbeitenden Auftrag existiert.

Sofern verfügbar, returned der "Broker" dieses Template an den "Instantiator". Das Template ist bereits ein ausführbarer Code bzw. interpretierbarer Code oder ein Schema dessen, der ggfs. noch interaktiv mit Parametern oder automatisch mit Unterroutinen (Beans als ausführbare Einheiten) bzw. Schnittstellen zu Services bzw. Diensten zu versehen ist. Der Broker verwaltet alle Templates bzw. den Zugriff auf diese und somit alle Auftragsprozesse. Ein neuer Auftrag wird folglich hinter dem Broker hinterlegt, der diesen Auftrag durch eine Suchanfrage oder durch Identifikatoren bestimmen kann.

Nach erhalten des Templates instanziiert der "Instantiator" (Fig. 2) (siehe Name) ein Auftrags- Objekt, angereichert um die Eingangsparameter, das nun durch die weiteren Komponenten des BPRB gereicht wird. Eine wichtige Eigenschaft dieses Objektes ist seine "Serialisierbarkeit". Diese ist damit zu begründen, dass es möglich sein muss, dieses Objekt zu persistieren. Hierzu sollte Vorzugswiese immer der Ablaufstatus bzw. Objektstatus des Objektes gespeichert werden, damit eine Wiederaufnahme zu einem späteren Zeitpunkt in der Prozesskette möglich ist.

Das oben beschriebene Auftrags-Objekt wird an den "Assembler" weitergeleitet. Aufgabe des "Assemblers" ist der Aufbau eines transienten Prozessbaumes, der das eigentliche Prozessieren des Auftrages ermöglicht. Zu diesem Zweck bedient sich der "Assembler" Meta-Informationen, die es ihm erlauben, einzelne Felder des Auftrages auf "Activity-Beans" (kleine ausführbare Einheiten) zu mappen. Über diese Meta-Information ist es dem Benutzer möglich, die am Ende ausgeführten Einheiten festzulegen.

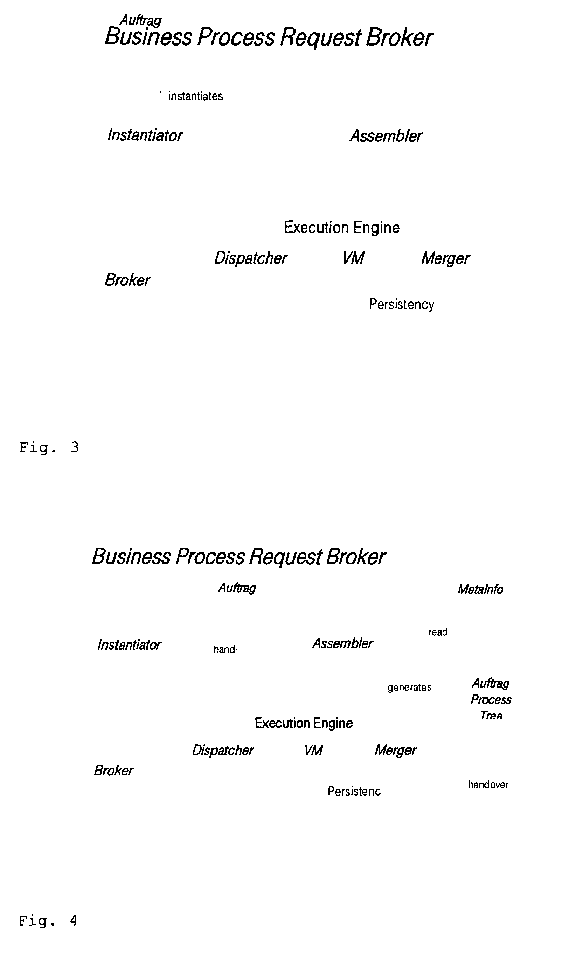

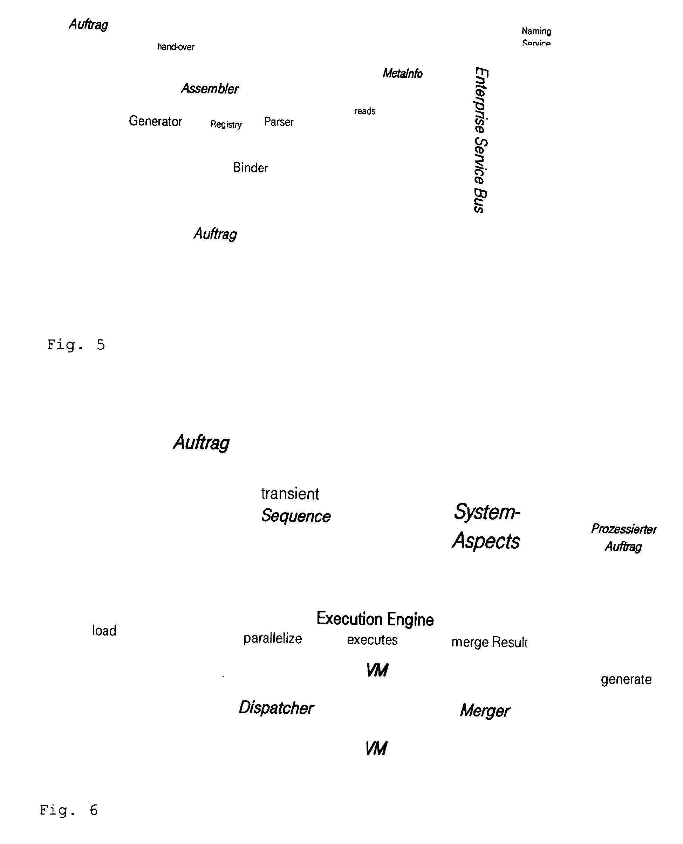

Die Fig. 4 und Fig. 5 illustriert den internen Aufbau des "Assembler". Kernkomponente ist der "Generator", der für den Aufbau des transienten Prozessbaumes verantwortlich zeichnet. Eine Registry verwaltet die an das System angemeldeten "Activity-Beans". Bei diesen handelt es sich einerseits um einfache Operationen (z.B. if, filter ...), anderseits um Container, die den Aufruf externer Services ermöglichen. Der angeführte "Binder" wird benötigt, um eben diese "Activity-Beans" an die externen Services zu binden.

Der so gebaute transiente Prozess-Baum wird nun als Teil des Auftrages an die "Execution Engine" (Fig. 4 und Fig. 6) weitergeleitet. Aufgabe dieser Komponente ist die Ausführung dieses Baumes.

Die Engine unterteilt sich in drei Teile:
1) Dispatcher
   Der "Dispatcher" ermöglicht ein automatisches Parallelisieren der eigentlichen Aufgabe und damit die Erhöhung des System-Durchsatzes. Sein Gegenstück ist der
2) Merger (siehe Fig. 6; Fig. 4)
   Ziel des "Merger" ist das Zusammenfügen der Einzelergebnisse, die bei der Parallelisierung des Prozess-Baumes entstehen. Die eigentliche Ausführung erfolgt in
3) VM
   Die VM (Virtuelle Machine) ist für die Ausführung einzelner "Activity Beans" zuständig. Ob eine solche zur Ausführung kommt, wird entschieden aufgrund der konfigurierbaren "System Aspects". Damit hat der Benutzer der Maschine die Möglichkeit, in den Programmfluss at-runtime einzugreifen um z.B. den Fluss für manuelle Interaktion anzuhalten.
   Es ist natürlich auch denkbar, dass die VM als Interpreter ausgebildet sind, die den Code der Activity Beans interpretieren.

## Patentansprüche

1. Ein Verfahren zum Erzeugen und Abarbeiten von Aufträgen, die in Form von digitalen Prozessen auf einem Computer abgebildet sind, wobei der Auftrag ein ausführbarer Code selber ist, der mit dem Auftrag erzeugt wird und danach abgearbeitet wird, umfassend die Schritte:
- Bestimmen eines Prozesses und Anfragen des Prozesstemplates von einem Broker;
- Bereitstellen eines Prozesstemplates durch den Broker, das bereits teilweise ausführbaren Code aufweist oder eine Codierung, die ersetzbar ist durch kleine Codeeinheiten,
- Instanzieren des Prozesstemplates mit Benutzereingaben;
- Aufbau eines transienten Prozessbaumes durch einen Assembler, wobei der Assembler Meta-Informationen verwendet um die Codierungen durch kleine Codeeinheiten, zu ersetzen, wobei der so erschaffene Code serialisierbar ist;
- Ausführen des Prozesstemplates auf einer virtuellen Maschine oder einem Interpreter, wobei vorher eine Analyse auf Parallelisierbarkeit erfolgt, um das Prozesstemplate ggfs. auf mehre Interpreter oder virtuelle Maschine aufzuteilen, und dann wieder zusammenzuführen.

2. Das Verfahren nach dem vorhergehenden Anspruch, wobei das Prozesstemplate bereits ein ausführbarer Code bzw. interpretierbarer Code oder ein Schema dessen ist, der vorzugsweise interaktiv mit Parametern oder automatisch mit Unterroutinen (Beans als auführbare Einheiten) bzw. Schnittstellen zu Services bzw. Diensten zu versehen wird.

3. Das Verfahren nach dem vorhergehenden Anspruch, wobei das Prozesstemplate serialisierbar ist, so dass es als Objekt zu persistieren ist.

4. Das Verfahren nach dem vorhergehenden Anspruch, wobei immer der Ablaufstatus bzw. Objektstatus des Objektes gespeichert wird, damit eine Wiederaufnahme zu einem späteren Zeitpunkt in der Prozesskette möglich ist.

5. Das Verfahren nach einem oder mehreren der vorhergehenden Ansprüche, wobei alle Eingabeparameter und Ergeignisse mit dem instantiierten Prozesstemplate abgespeichert werden, so dass ein identisches ausführen des Codes zu einem späteren Zeitpunkt erfolgt.

6. Das Verfahren nach einem oder mehreren der vorhergehenden Ansprüche, wobei ein Generator der für den Aufbau des transienten Prozessbaumes verantwortlich zeichnet, wobei eine Registry die an das System angemeldeten Activity-Beans verwaltet, bei diesen handelt es sich einerseits um einfache Operationen und anderseits um Container, die den Aufruf externer Services ermöglichen, wobei ein Binder benötigt wird, um eben die Activity-Beans an die externen Services zu binden.

7. Das Verfahren nach einem oder mehreren der vorhergehenden Ansprüche, wobei der transiente Prozess-Baum als Teil des Auftrages an die Execution- Engine weitergeleitet wird, die den Baum ausführt.

8. Das Verfahren nach dem vorhergehenden Anspruch, wobei sich die Execution- Engine in drei Teile unterteilt:
1) Dispatcher, dieser ermöglicht ein automatisches Parallelisieren der eigentlichen Aufgabe und dient damit der Erhöhung des System-Durchsatzes,
2)Der Merger fügt Einzelergebnisse zusammen, die bei der Parallelisierung des Prozess-Baumes entstehen;
3) VM (Virtuelle Machine) ist für die Ausführung einzelner Activity Beans zuständig.

9. Das Verfahren nach dem vorhergehenden Anspruch, wobei entschieden wird, ob eine Activity Bean ausgeführt wird, aufgrund der konfigurierbaren System Aspects, wodurch der Benutzer der Maschine die Möglichkeit hat, in den Programmfluss zur Laufzeit einzugreifen um z.B. den Fluss für manuelle Interaktion anzuhalten.

10. Eine Vorrichtung zum Erzeugen und Abarbeiten von Aufträgen, die in Form von digitalen Prozessen auf einem Computer abgebildet sind, wobei der Auftrag ein ausführbarer Code selber ist, der mit dem Anlagen des Auftrages erzeugt wird und danach abgearbeitet wird, umfassend die Einheiten:
- einen Broker eines Prozesstemplates, das bereits teilweise ausführbaren Code aufweist oder eine Codierung, die ersetzbar ist durch kleine Codeeinheiten,
- einen Instanzierer der das Prozesstemplate mit Benutzereingaben instanziiert;
- einen Assembler zum Aufbau eines transienten Prozessbaumes, wobei der Assembler Meta-Informationen verwendet um die Codierungen durch kleine Codeeinheiten, zu ersetzen, wobei der so erschaffene Code serialisierbar ist;
- virtuelle Maschine oder einen Interpreter zum Ausführen des Prozesstemplates, wobei vorher eine Analyse auf Parallelisierbarkeit erfolgt, um das Prozesstemplate ggfs. auf mehre Interpreter oder virtuelle Maschinen aufzuteilen, und dann wieder zusammenzuführen.

11. Die Vorrichtung nach dem vorhergehenden Anspruch, wobei das Prozesstemplate bereits ein ausführbarer Code bzw. interpretierbarer Code oder ein Schema dessen ist, der vorzugsweise interaktiv mit Parametern oder automatisch mit Unterroutinen (Beans als ausführbare Einheiten) bzw. Schnittstellen zu Services bzw. Diensten zu versehen wird.

12. Die Vorrichtung nach dem vorhergehenden Vorrichtungsanspruch, wobei das Prozesstemplate serialisierbar ist, so dass es als Objekt auf einem Speichersystem zu persistieren ist.

13. Die Vorrichtung nach dem vorhergehenden Vorrichtungsanspruch, wobei Ablaufstatus bzw. Objektstatus des Objektes gespeichert werden, damit eine Wiederaufnahme zu einem späteren Zeitpunkt in der Prozesskette möglich ist.

14. Die Vorrichtung nach einem oder mehreren der vorhergehenden Vorrichtungsansprüche, wobei auf einem Speichersystem alle Eingabeparameter und Ereignisse mit dem instanierten Prozesstemplate abgespeichert werden, so dass ein identisches Ausführen des Codes zu einem späteren Zeitpunkt erfolgen kann.

15. Die Vorrichtung nach einem oder mehreren der vorhergehenden Vorrichtungsansprüche, wobei ein Generator für den Aufbau des transienten Prozessbaumes verantwortlich ist, wobei eine Registry verwaltet wird, die an das System angemeldeten Activity-Beans verwaltet, bei diesen handelt es sich einerseits um einfache Operationen und anderseits um Container, die den Aufruf externer Services ermöglichen, wobei ein Binder benötigt wird, um eben die Activity-Beans an die externen Services zu binden.

16. Die Vorrichtung nach einem oder mehreren der vorhergehenden Vorrichtungsansprüche, wobei eine Execution Engine den transienten Prozess-Baum als Teil des Auftrages erhält, die den Baum ausführt.

17. Die Vorrichtung nach dem vorhergehenden Vorrichtungsanspruch, wobei sich die Execution- Engine in drei Teile unterteilt:
1) Dispatcher, dieser ermöglicht ein automatisches Parallelisieren der eigentlichen Aufgabe und dient damit der Erhöhung des System-Durchsatzes,
2)Der Merger fügt Einzelergebnisse zusammen, die bei der Parallelisierung des Prozess-Baumes entstehen;
3) VM (Virtuelle Machine) ist für die Ausführung einzelner Activity Beans zuständig.

18. Die Vorrichtung nach dem vorhergehenden Vorrichtungsanspruch, wobei entschieden wird, ob eine Activity Bean ausgeführt wird, aufgrund der konfigurierbaren System Aspects, wodurch der Benutzer der Maschine die Möglichkeit hat, in den Programmfluss zur Laufzeit einzugreifen um z.B. den Fluss für manuelle Interaktion anzuhalten.

19. Datenträger, der eine Struktur umfasst, die nach dem Laden durch einen Computer ein Verfahren nach einem oder mehreren der vorhergehenden Ansprüche implementiert.
